# EUROPEAN PATENT SPECIFICATION

(11) **EP 0 569 771 B1**
(45) Date of publication and mention of the grant of the patent: **10.12.1997**
(21) Application number: 93106777.1
(22) Date of filing: 27.04.1993
(51) Int. Cl.: G11B 5/72

(54) **Metal thin film type magnetic recording medium**
Magnetischer Aufzeichnungsträger mit dünnem Metallfilm
Milieu d'enregistrement magnétique du type film mince métallique

(30) Priority: 30.04.1992 JP 111191/92
(43) Date of publication of application: 18.11.1993
(73) Proprietor: MATSUSHITA ELECTRIC INDUSTRIAL CO., LTD., Kadoma-shi, Osaka-fu, 571 (JP)
(72) Inventor: Murai, Mikio, Hirakata-shi, Osaka-fu (JP); Takahashi, Kiyoshi, Ibaraki-shi, Osaka-fu (JP); Odagiri, Masaru, Kawanishi-shi, Hyogo-ken (JP); Ueda, Hideyuki, Takatsuki-shi, Osaka-fu (JP); Ohchi, Yukikazu, Kadoma-shi, Osaka-fu (JP)
(74) Representative: Eisenführ, Speiser & Partner

(56) References cited:
- EP-A- 0 194 675
- EP-A- 0 206 115
- EP-A- 0 432 536

## Description

The present invention relates to a method for making a metal thin film type magnetic recording medium. More particularly, the metal thin film type magnetic recording medium obtained by the method of the present invention is suitable for a digital video tape recorder or a high definition video tape recorder.

With magnetic recording media comprising a ferromagnetic metal thin film as a magnetic recording layer, various attempts have been made to improve their corrosion resistance, still durability, running durability and the like. For example, it has been proposed to provide a carboxylic acid or phosphoric acid lubricant layer on the ferromagnetic metal thin film, or to provide a protective film of a nonmagnetic metal or an oxide (e.g. silica) on the ferromagnetic metal thin film.

Recent US Patent No. 4,713,288 discloses a carbonaceous protective film on the ferromagnetic metal thin film, and US Patent No. 4,717,622 discloses the formation of a hard carbon film on the ferromagnetic metal thin film by decomposing a hydrocarbon by the plasma CVD method.

Further, US Patent No. 4,755,426 discloses amorphous carbon as a protective film of the magnetic layer.

While, as explained above, the hard carbon film can be formed on the ferromagnetic metal thin film by many methods, a deposition rate of the carbon film is very low and it is highly desired to increase the deposition rate of the carbon film. But, this problem of the low deposition rate of the carbon protective film has not been solved in the sputtering method or the plasma CVD method, and is very serious problem in the production of magnetic recording media such as magnetic tapes.

US Patent No. 4,833,031 discloses a further improvement, which forms a hard carbon film on the ferromagnetic metal thin film by the plasma CVD method and a lubricant layer on the hard carbon film to increase the durability.

Alternatively, US Patent No. 5,110,676 discloses the provision of a lubricant layer on an additional carbon film having a thickness of 2 to 5 nm (20 to 50Å) on the hard carbon which is formed by the plasma CVD method.

In the case of a magnetic recording medium such as a magnetic tape with which the high film formation rate is required, U.S. Patent No. 5,182,132 (which corresponds to EP-A-0 432 536) discloses the stable formation of a hard carbon film by the plasma CVD method using a hydrocarbon such as 2,3-dimethyl-1,3-butadiene, benzene or toluene with controlling a superposing ratio of an alternating current and a direct current. But, the film deposition rate reaches only 18 nm/s (180 Å/s) and is not satisfactory. In this method, abnormal discharge, namely sudden increase of the current can be suppressed greatly, but does not reach zero.

An object of the present invention is to provide a metal thin film type magnetic recording medium having a hard carbon film which can be formed by a plasma CVD method at a high deposition rate of up to 30 nm/s (300 Å/s) at a low voltage.

This object is attained by a method as defined in claim 1. Preferred embodiments of this method are defined by the subclaims.
Fig. 1 is a schematic cross sectional view of an example of a metal thin film type magnetic recording medium,
Fig. 2 is a schematic view of an apparatus used for forming the hard carbon film on the metal thin film type magnetic recording medium,
Fig. 3 is a graph showing a relationship between a density of the magnetic layer and a still life of the metal thin film type magnetic recording medium,
Fig. 4 is a graph showing the deposition rates of the hard carbon films using the hydrocarbons of a prior art and the hydrocarbons of the present invention,
Fig. 5 is a graph showing the relationship between the still life and the deposition rate in the Sample Nos. 9 to 18,
Fig. 6 is a graph showing the relationship between the number of abnormal discharges and the deposition rate, and
Fig. 7 is a graph showing the relationship between the still life and the Vickers hardness in the Sample Nos. 19 to 24.

Now, the present invention will be explained in detail by making reference to the accompanying drawings.

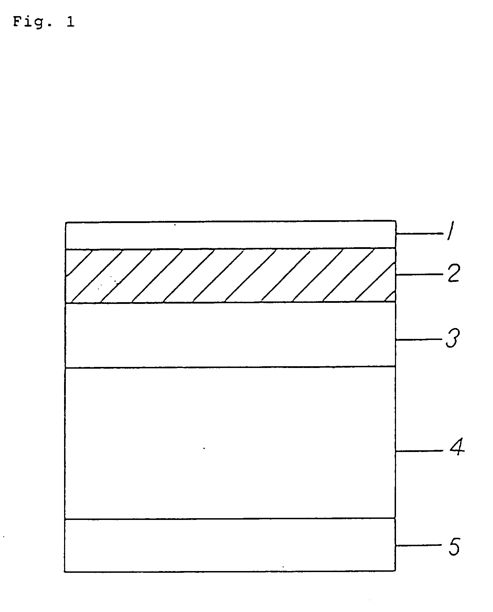

Fig. 1 shows a schematic cross sectional view of the metal thin film type magnetic recording medium, which comprises a nonmagnetic support 4, a ferromagnetic metal thin film 3, a hard carbon film 2, a lubricant layer 1 and a backcoating layer 5.

The lubricant layer 1 may comprise a fluorine-containing carboxylic acid and have a thickness of 3 to 5 nm (30 to 50 Å). The fluorine-containing carboxylic acid may be used as such or as a mixture with an ester of the fluorine-containing carboxylic acid. Preferred examples of the fluorine-containing carboxylic acid or its ester are C₅F₁₁(CH₂)₁₀COOH, C₆F₅CH₂-CH(OH)-(CH₂)₁₄COOH, C₁₆H₃₃-CH(OCOC₈F₁₇)-COOH, C₅F₁₁(CH₂)₁₀COOC₈H₁₇, C₆F₁₁OC₆H₄(CH₂)₁₁COOC₁₀H₂₁, and (C₆F₅)₂-CH(CH₂)₁₅-CH(CH₃)-COOC₆H₁₃ and the like. Other conventional lubricant may be used.

The hard carbon film 2 has a Vickers hardness of 1000 to 5000 and, together with the lubricant layer 1, prevents damages of the magnetic recording medium. The thickness of the hard carbon film is preferably from 8 to 20 nm (80 to 200 Å), more preferably from 8 to 12 nm (80 to 120 Å) in view of the balance between reliability and output.

The ferromagnetic metal thin film 3 may be formed from any one of the conventionally used ferromagnetic metals such as Co-Ni-O, Co-O, Co-Cr and the like. The thickness of the ferromagnetic thin film is usually from 150 to 300 nm (1500 to 3000 Å), preferably from 150 to 300 nm (1500 to 2000 Å).

The nonmagnetic support 4 may be made of any one of the conventionally used nonmagnetic materials such as polyethylene terephthalate, polyethylene naphthalate, polyamide, polyimide and the like. In view of a production cost, polyethylene terephthalate is preferred. In view of the achievement of both the reliability and high output, the surface of the support on which the magnetic layer is formed preferably has protrusions having heights of 10 to 30 nm (100 to 300 Å) and diameters of 50 to 200 nm (500 to 2000 Å).

The backcoating layer 5 is also formed from a conventional material, for example, a backcoating composition comprising a binder resin (e.g. polyurethane, nitrocellulose, polyesters, etc.) and a filler (e.g. carbon black, calcium carbonate, etc.). A thickness of the back-coating layer is preferably 500 nm (5000 Å) or less.

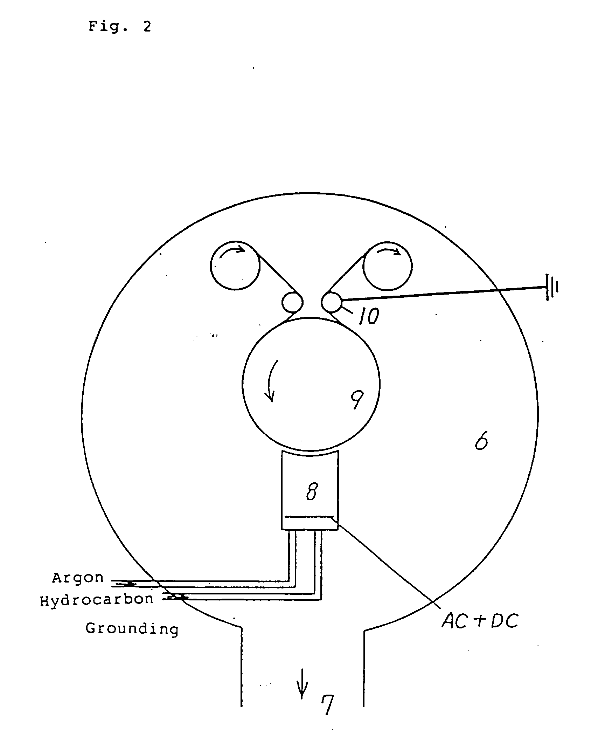

Fig. 2 schematically shows an apparatus for forming the hard carbon film on the metal thin film type magnetic recording medium.

The apparatus has a vacuum chamber 6, internal pressure of which can be reduced in a range between 0.013 and 0.13 Pa (10⁻⁴ and 10⁻³ Torr) by venting internal gas by a vacuum pump (not shown) through an exhaust vent 7.

In the chamber 6, there is provided a discharge tube 8 for forming the hard carbon film, and an alternating current and a direct current are supplied to an electrode in the discharge tube 8. To the discharge tube, an inert gas, preferably argon and the hydrocarbon gas are supplied via respective supply pipes. The distance between the discharge tube 8 and a can 9 is adjusted from 0.5 to 0.3 mm, whereby the pressure difference between the inside of the discharge tube and the vacuum chamber is controlled. The discharge tube 8 is preferably made of engineering plastic.

In the vacuum chanber, there is also provided a current supply roll 10, a surface resistivity of which is preferably adjusted in a range between 10³ to 10⁵ Ω to prevent the formation of pin holes due to thermal degradation caused by concentration of electric currents, even when the polyethylene terephthalate film is used as the nonmagnetic support.

The present invention including the production conditions will be explained further in detail by making reference to the specific embodiments.

### Example 1

On one surface of a nonmagnetic support 4 made of a polyethylene terephthalate film on which surface protrusions having a height of 30 nm (300 Å) and a diameter of 200 nm (2000 Å) by the STM analysis were formed in a density of 10⁵/mm² to 10⁹/mm², a ferromagnetic metal thin film 3 of Co-O having a thickness of 180 nm (1800 Å) was formed by a slant vacuum deposition method with supplying oxygen gas. By control of the injection angle of Co vapor, Sample Nos. 1 to 8 having a density of the metal thin film of 2.0, 2.9, 3.0, 4.0, 5.0, 6.0, 6.2 and 7.0 g/cm³, respectively were produced. To achieve a low density, the amount of the Co vapor injected at a high angle was increased and the amount of the supplied oxygen gas was also increased during the vacuum deposition, while to achieve a high density, the amount of the Co vapor injected at a low angle is increased and the amount of the supplied oxygen gas was decreased.

On the other surface of each nonmagnetic support 4, a backcoating paint comprising polyurethane, nitrocellulose, carbon black and a mixed solvent of methyl ethyl ketone, toluene and cyclohexanone and having a solid content of 30 % was coated with a reverse roll coater to a dry thickness of 500 nm (5000 Å) and dried to form a backcoating layer.

On the metal thin film of each of the Sample Nos. 1 to 8, the hard carbon film 2 having a thickness of 13 nm (130 Å) was formed by the apparatus of Fig. 2 under a p-xylene pressure of 27 Pa (0.20 Torr), argon pressure of 9.3 Pa (0.07 Torr) with supplying a direct current of +800 V and an alternating current of 20 KHz at an effective voltage of 800 V.

Then, a 1 % solution of C₅F₁₁(CH₂)₁₀COOH in metyl ethyl ketone was coated with a coater on the metal thin film to a dry thickness of 3 nm (30 Å), and the coated film was slit at a width of 8 mm.

To evaluate the influence of the density of magnetic layer on the reliability of the magnetic recording tape, a still life of each tape was measured on a 8 mm VTR at 23°C, 10%RH.

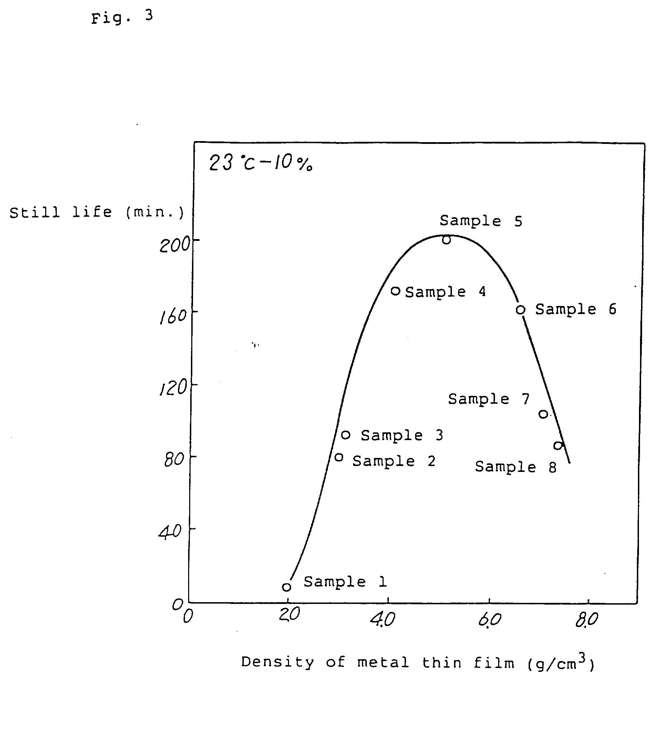

The results are shown in Fig. 3.

From the results shown in Fig. 3, it is understood that the density of the magnetic layer greatly influences the reliability of the magnetic recording medium, and the still life is long and stable when the density of magnetic layer is from 3.0 to 6.0 g/cm³.

When the density of magnetic layer is less than 3.0 g/cm³, a degree of deformation of magnetic layer increases so that the magnetic layer is damaged and the still life is deteriorated. When the density of magnetic layer exceeds 6.0, the magnetic layer is not deformed substantially and the plane pressure increases so that the still life is worsened.

### Example 2

On the metal thin film of the Sample No. 4, a hard carbon film 2 having a thickness of 12 nm (120 Å) was formed using the apparatus of Fig. 2 as follows:

To an electrode of the discharge tube 8 having a length of 400 mm, the direct current of +800 V and the alternating current of 20 KHz at the effective voltage of 1000 V were superposed. The internal pressure of the discharge tube 8 was adjusted to an argon gas pressure of 4 Pa (0.03 Torr) and a hydrocarbon gas pressure of 27 Pa (0.20 Torr). Sample Nos. 9 to 18 were produced using methane, propane, benzene, toluene, p-xylene, trimethylbenzene, cumene, 4-tert.-butyltoluene, 4-tert.-butyl-1-pentylbenzene, and 4-heptyl-1-octylbenzene, respectively.

Except methane and propane, the hydrocarbon was introduced in the discharge tube by heating and evaporating the hydrocarbon.

In addition to the above hydrocarbons, any of the mono-, di- and trialkylbenzene having 1 to 6 carbon atoms in each alkyl group (e.g. tert.-amyl benzene, propylbenzene, etc.) can be used.

When the alkyl group or groups are branched, the hardness of the carbon film is increased even when the discharge voltage is low. As the result, abnormal discharge, namely shifting from a glow discharge to arc discharge does not occur during the long time discharge.

On the hard carbon film of each sample, the lubricant layer of C₅F₁₁(CH₂)₁₀COOH having a thickness of 3 nm (30 Å) was formed in the same manner as in Example 1, and the coated film was slit at a width of 8 mm.

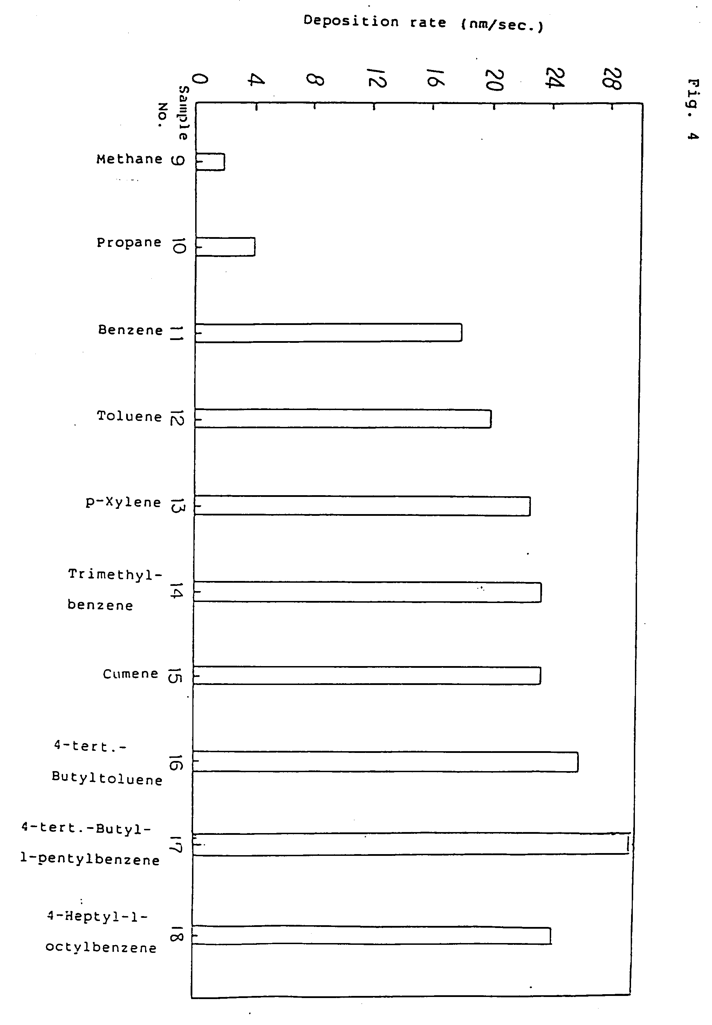

The deposition rates of the hard carbon film 2 in the Sample Nos. 9 to 18 are shown in Fig. 4.

In the Sample Nos. 13 to 18 using mono-, di- or tri-(C₁-C₆)alkylbenzenes, the deposition rate of the carbon film was above 20 nm/s, which is an industrially acceptable rate.

In particular, in the Sample Nos. 16 and 17, the deposition rate exceed about 26 nm/s (260 Å/s).

But, when the alkyl group on the benzene ring has more than 6 carbon atoms, the internal pressure of the discharge tube 8 did not reach a pressure sufficient for the plasma CVD even when the hydrocarbon was heated and bubbled with argon gas. Then, the deposition rate decreased to (250 Å/s). From the above result, the number of carbon atoms in the alkyl group is not larger than 6, preferably not larger than 3.

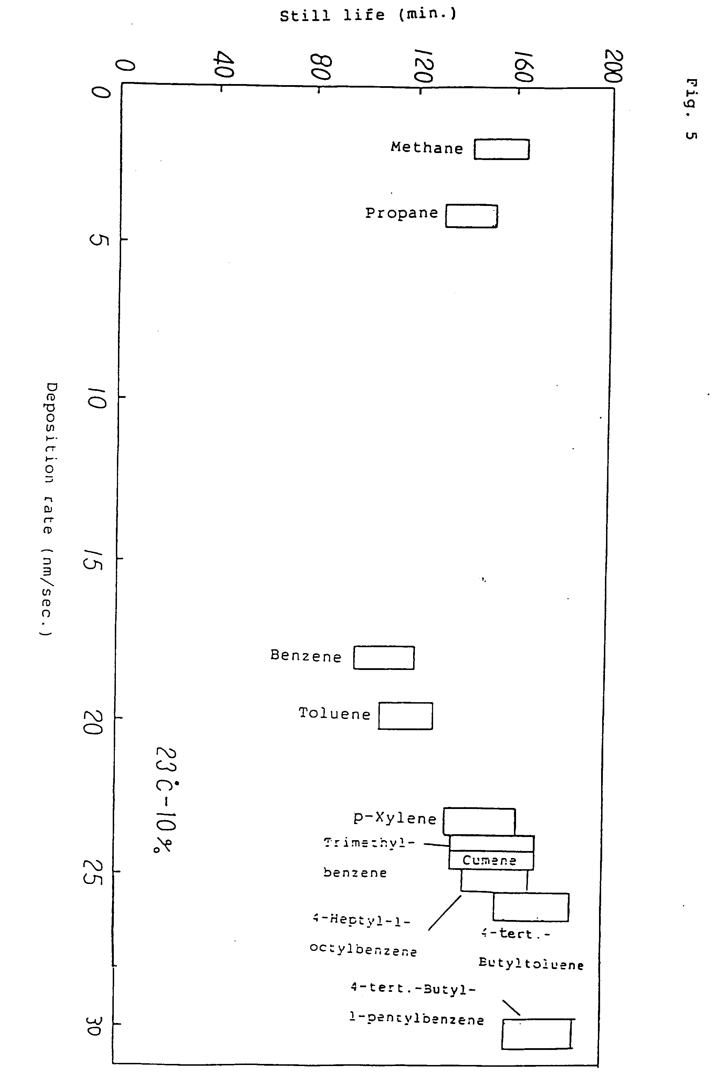

Fig. 5 shows the relationship between the still life measured on the 8 mm VTR (23°C-10 %RH) and the deposition rate in the Sample Nos. 9 to 18. From these results, it is understood that, when the hard carbon film is prepared from the alkylbenzene having 1 to 3 carbon atoms in the alkyl group, the magnetic tape has the still life which is the same as or better than that of the magnetic tape having the hard carbon film prepared from methane. The Sample No. 18 had substantially the same level still life as the Sample Nos. 12 to 17.

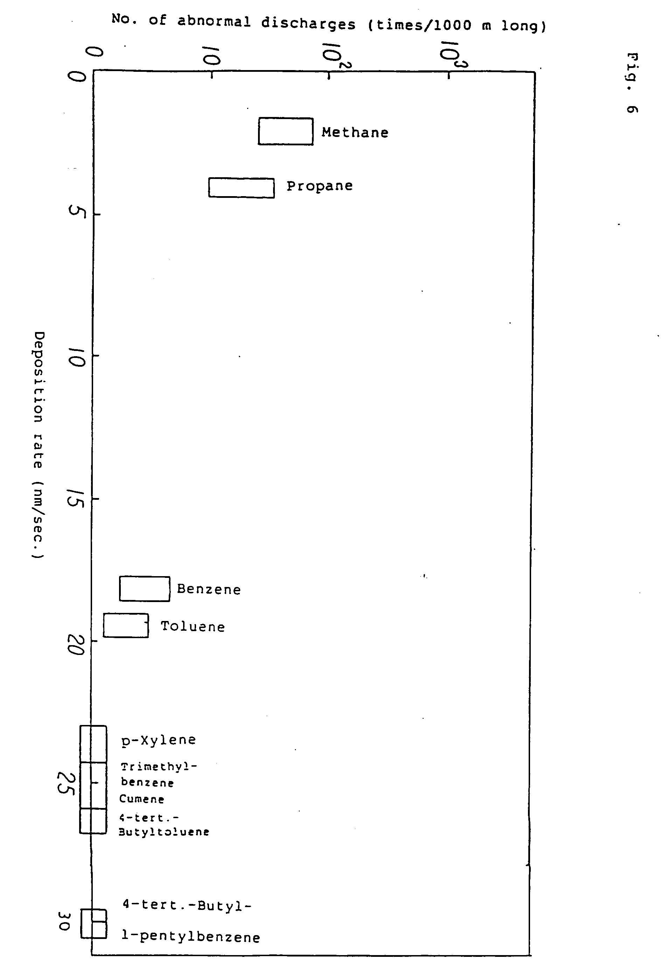

Fig. 6 shows the relationship between the number of abnormal discharges, that is, the number of shifts from the glow discharge to the arc discharge per 1000 m of the film and the deposition rate.

With the Sample Nos. 12 to 18 using the mono-, di- and trialkylbenzene having 1 to 6 carbon atoms in the alkyl group, the stability of discharge was remarkably improved, and the number of abnormal discharges was substantially zero. As the result, the productivity of the magnetic recording media was considerably increased. The presence of the hard carbon film prevented the increase of dropouts.

The number of abnormal discharges with the Sample No. 18 was the same as that with the Sample Nos. 12 to 17.

### Example 3

On the metal thin film of the Sample No. 5, the hard carbon film 2 having a thickness of 12 nm (120 Å) was formed from toluene by the apparatus of Fig. 2 while changing the voltage to be applied to the electrode of the discharge tube 8. The argon pressure was 9.3 Pa (0.07 Torr) and the toluene pressure was 27 Pa (0.20 Torr).

The Vickers hardness of the carbon film and the still lives of the magnetic tapes are shown in the Table. The Vickers hardness was measured using the micro-Vickers hardness tester (manufactured by Japan Hightech Kabushikikaisha) with the hard carbon film having a thickness of 1.0 µm formed on a silicon wafer.

The still life was measured on the 8 mm VTR at 23°C, 10 %RH with the magnetic tape having the lubricant layer of C₅F₁₁(CH₂)₁₀COOH having a thickness of 3 nm (30 Å) on the hard carbon film.

**Table**

| Sample No. | Voltage (V) | | Vickers hardness (kg/mm²) | Still life (min.) of the tape at 23°C, 10 %RH |
|---|---|---|---|---|
| | DC | AC | | |
| 19 | 200 | 200 | 500 | 40 |
| 20 | 300 | 300 | 1000 | 120 |
| 21 | 800 | 800 | 2000 | 180 |
| 22 | 1000 | 1000 | 3000 | 200 |
| 23 | 1500 | 1500 | 5000 | 220 |
| 24 | 2000 | 3000 | 6000 | 180 |

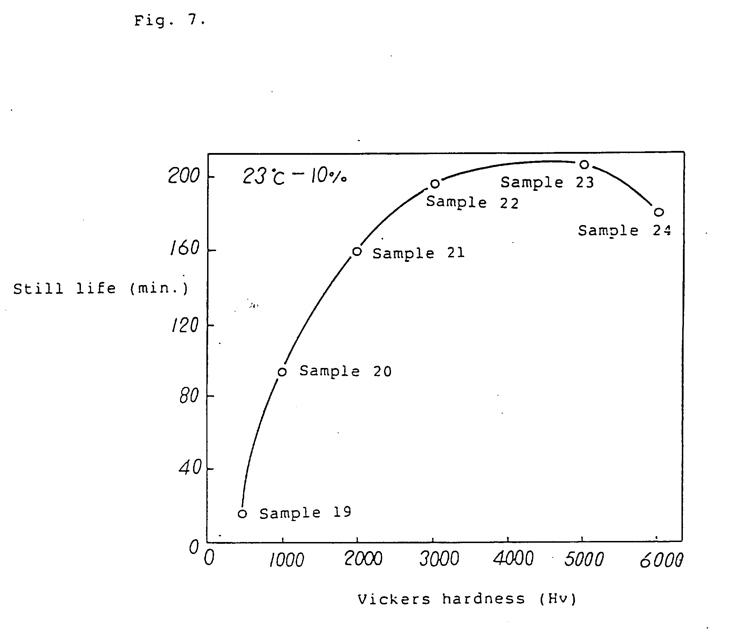

The above results are also shown in Fig. 7. From these results, it is understood that the voltage of 300 V to 2000 V was suitable for the DC, and the effective voltage of 300 V to 3000 V was suitable for AC. When the voltage is higher than the upper limit, the abnormal discharge, namely the arc discharge tend to be generated. When the voltage is lower than the lower limit, the carbon film has insufficient hardness.

The resistivities of the Sample Nos. 9 to 18 were measured at 23°C, 50 %RH. All the resistivities were in the range between 10⁷ to 10¹¹ Ω×m (10⁹ to 10¹³ Ω.cm).

The hard carbon films of the Samples Nos. 9 to 18 were subjected to the X-ray diffraction and RHEED. It was found that all the carbon films had the amorphous structure.

From the FT-IR analysis, it was found that the carbon films contained hydrogen atoms.

In Raman spectroscopy, two peaks assigned to diamond-like carbon and graphite were observed.

## Claims

1. A method for making a magnetic recording medium of the metal thin film type, the method comprising
forming a ferromagnetic metal thin film (3) having a density of 3,0 to 6,0 g/cm³ on one surface of a nonmagnetic support (4),
forming a hard carbon film (2) having a Vickers hardness of 1000 to 5000 on said ferromagnetic metal thin film (3) by a plasma CVD method from a mixture of an inert gas and at least one hydrocarbon, and
forming a lubricant layer (1) on said hard carbon film (2) and a backcoating layer (5) on the other surface of said nonmagnetic support (4),
**characterized in that**
said hydrocarbon is selected from the group consisting of mono-, di- and trialkylbenzenes having 1 to 6 carbon atoms in each alkyl group,
with the proviso that toluene is excluded.

2. The method of claim 1, characterized in that said hard carbon film (2) is formed to have a thickness of from 8 to 20 nm, the plasma CVD method being conducted at a deposition rate of above 20 nm/s without abnormal discharge while controlling the pressure difference between a can (9) and a discharge tube (8) by adjusting the distance therebetween.

3. The method of claim 2, characterized in that said hard carbon film (2) has an amorphous structure containing a diamond structure and a graphite structure and contains hydrogen atoms.

4. The method of claim 2, characterized in that said hard carbon film (2) has a resistivity of 10⁷ to 10¹¹ Ω×m.

5. The method of anyone of the preceding claims, charcterized in that said ferromagnetic metal thin film (3) is made of at least one metal material selected from the group consisting of Co-Ni-O, Co-O and Co-Cr.

6. The method of anyone of the preceding claims, chracterized in that said lubricant layer (1) is formed from a fluorine-containing carboxylic acid or a mixture of a fluorine-containing carboxylic acid and an ester of a fluorine-containing carboxylic acid.

7. The method of claim 6, characterized in that said lubricant layer (1) has a thickness of 1 to 5 nm.

8. The method of anyone of the preceding claims, characterized in that said one surface of said nonmagnetic support (4) on which said ferromagnetic metal thin film (3) is formed has protrusions having heights of 10 to 30 nm and diameters of 50 to 200 nm.

9. The method of anyone of the preceding claims, characterized in that said nonmagnetic support (4) is a film made of at least one material selected from polyethylene terephthalate, polyethylene naphthalate, polyimide and polyamide.

## Patentansprüche

1. Verfahren zum Herstellen eines magnetischen Aufzeichnungsmediums mit Metalldünnschicht, wobei man bei dem Verfahren
auf einer Oberfläche eines nichtmagnetischen Trägers (4) eine ferromagnetische Metalldünnschicht (3) ausbildet, die eine Dichte von 3,0 bis 6,0 g/cm³ hat,
auf der Metalldünnschicht (3) mit einem Plasma-CVD-Verfahren aus einem Gemisch aus einem inerten Gas und mindestens einem Kohlenwasserstoff eine Hartkohlenstoffschicht (2) ausbildet, die eine Vickers-Härte von 1.000 bis 5.000 hat und
auf der Hartkohlenstoffschicht (2) eine Schmiermittelschicht (1) und auf der anderen Oberfläche des nichtmagnetischen Trägers (4) eine Rückenbeschichtung (5) ausbildet,
**dadurch gekennzeichnet,** daß
man den Kohlenwasserstoff auswählt aus der Gruppe der Mono-, Di- und Trialkylbenzole mit 1 bis 6 Kohlenstoffatomen in jeder Alkylgruppe,
mit der Maßgabe, daß Toluol ausgeschlossen ist.

2. Verfahren nach Anspruch 1, dadurch gekennzeichnet, daß man die Hartkohlenstoffschicht (2) mit einer Dicke von 8 bis 20 nm ausbildet, das Plasma-CVD-Verfahren mit einer Abscheidungsgeschwindigkeit von größer 20 nm/s ohne abnorme Entladung durchführt, wobei man die Druckdifferenz zwischen einer Walze (9) und einem Entladungsrohr (8) steuert, indem man die Distanz dazwischen einstellt.

3. Verfahren nach Anspruch 2, dadurch gekennzeichnet, daß die Hartkohlenstoffschicht (2) eine eine Diamantstruktur und eine Graphitstruktur enthaltende amorphe Struktur aufweist und Wasserstoffatome enthält.

4. Verfahren nach Anspruch 2, dadurch gekennzeichnet, daß die Hartkohlenstoffschicht (2) einen spezifischen Widerstand von 10⁷ bis 10¹¹ Ω×m aufweist.

5. Verfahren nach einem der vorhergehenden Ansprüche, dadurch gekennzeichnet, daß die ferromagnetische Metalldünnschicht (3) aus mindestens einem Metallmaterial hergestellt ist, ausgewählt aus der Gruppe Co-Ni-O, Co-O und Co-Cr.

6. Verfahren nach einem der vorhergehenden Ansprüche, dadurch gekennzeichnet, daß man die Schmiermittelschicht (1) aus einer Fluor enthaltenden Carbonsäure oder einem Gemisch aus einer Fluor enthaltenden Carbonsäure und einem Ester einer Fluor enthaltenden Carbonsäure herstellt.

7. Verfahren nach Anspruch 6, dadurch gekennzeichnet, daß die Schmiermittelschicht (1) eine Dicke von 1 bis 5 nm hat.

8. Verfahren nach einem der vorhergehenden Ansprüche, dadurch gekennzeichnet, daß die Oberfläche des nichtmagnetischen Trägers (4), auf der die ferromagnetische Metalldünnschicht (3) ausgebildet wird, Vorstöße mit einer Höhe von 10 bis 30 nm und einem Durchmesser von 50 bis 200 nm aufweist.

9. Verfahren nach einem der vorhergehenden Ansprüche, dadurch gekennzeichnet, daß der nichtmagnetische Träger (4) eine Schicht ist, hergestellt aus mindestens einem Material ausgewählt aus Polyethylenterephthalat, Polyethylennaphthalat, Polyimid und Polyamid.

## Revendications

1. Procédé pour la fabrication d'un milieu d'enregistrement magnétique du type à film fin de métal, le procédé comprenant :
la formation d'un film fin de métal ferromagnétique (3) ayant une densité de 3,0 à 6,0 g/cm³ sur une surface d'un support amagnétique (4), la formation d'un film de carbone dur (2) ayant une dureté Vickers de 1000 à 5000 sur ledit film fin de métal ferromagnétique (3) par un procédé de déposition en phase vapeur par procédé chimique à plasma (CVD) à partir d'un mélange d'un gaz inerte et d'au moins un hydrocarbure, et
la formation d'une couche de lubrifiant (1) sur ledit film de carbone dur (2) et d'une couche d'enduction d'envers (5) sur l'autre surface dudit support amagnétique (4),
**caractérisé** en ce que
ledit hydrocarbure est choisi dans le groupe constitué des mono-, di- et trialkylbenzènes ayant 1 à 6 atomes de carbone dans groupe alkyle, à condition que le toluène soit exclu.

2. Procédé selon la revendication 1, caractérisé en ce que ledit film de carbone dur (2) est formé de manière à avoir une épaisseur de 8 à 20 nm, le procédé CVD à plasma étant conduit à une vitesse de déposition supérieure à 20 nm/s sans décharge anormale tout en contrôlant la différence de pression entre un récipient (9) et un tube à décharge (8) par réglage de la distance les séparant.

3. Procédé selon la revendication 2, caractérisé en ce que ledit film de carbone dur (2) a une structure amorphe contenant une structure de diamant et une structure de graphite et contient des atomes d'hydrogène.

4. Procédé selon la revendication 2, caractérisé en ce que ledit film de carbone dur (2) a une résistivité de 10⁷ à 10¹¹Ωxm.

5. Procédé selon l'une quelconque des revendications précédentes, caractérisé en ce que ledit film fin de métal ferromagnétique (3) est constitué d'au moins un matériau métallique choisi dans le groupe constitué de Co-Ni-O, Co-O et Co-Cr.

6. Procédé selon l'une quelconque des revendications précédentes, caractérisé en ce que ladite couche de lubrifiant (1) est formée d'un acide carboxylique contenant du fluor ou d'un mélange d'un acide carboxylique contenant du fluor et d'un ester d'un acide carboxylique contenant du fluor.

7. Procédé selon la revendication 6, caractérisé en ce que ladite couche de lubrifiant (1) a une épaisseur de 1 à 5 nm.

8. Procédé selon l'une quelconque des revendications précédentes, caractérisé en ce que ladite surface dudit support amagnétique (4) sur laquelle est formé ledit film fin de métal ferromagnétique (3) comporte des saillies ayant des hauteurs de 10 à 30 nm et des diamètres de 50 à 200 nm.

9. Procédé selon l'une quelconque des revendications précédentes, caractérisé en ce que ledit support amagnétique (4) est un film constitué d'au moins un matériau choisi parmi le téréphthalate de polyéthylène, le naphthalate de polyéthylène, un polyimide et un polyamide.
